# EUROPÄISCHE PATENTSCHRIFT

(11) **EP 1 144 187 B1**
(45) Veröffentlichungstag und Bekanntmachung des Hinweises auf die Patenterteilung: **29.11.2006**
(21) Anmeldenummer: 99957923.8
(22) Anmeldetag: 20.10.1999
(51) Int. Cl.: B32B 7/04, B32B 5/24, D04H 1/54, D04H 13/00, A61F 13/515

(54) **MEHRSCHICHTIGES VERBUNDMATERIAL**
MULTI-LAYER COMPOSITE MATERIAL
MATERIAU COMPOSITE MULTICOUCHE

(30) Priorität: 10.11.1998 DE 19851667
(43) Veröffentlichungstag der Anmeldung: 17.10.2001
(73) Patentinhaber: Coronor Composites GmbH, 31224 Peine (DE)
(72) Erfinder: BOICH, Heinz-Horst, D-31224 Peine (DE)
(74) Vertreter: Schulz, Björn
(86) Internationale Anmeldenummer: PCT/DE1999/003359
(87) Internationale Veröffentlichungsnummer: WO 2000/027626

(56) Entgegenhaltungen:
- EP-A- 0 374 910
- EP-A- 0 466 563
- EP-A- 0 596 532
- EP-A- 0 604 731
- DE-A- 19 523 497
- US-A- 4 761 322

## Beschreibung

Die Erfindung betrifft ein mehrschichtiges Verbundmaterial gemäß dem Oberbegriff des Patentanspruchs 1 und ein Verfahren zur Herstellung eines mehrschichtigen Verbundmaterials gemäß dem Oberbegriff des Patentanspruchs 18.

Es sind eine Vielzahl von mehrschichtigen Verbundmaterialien bekannt, welche aus wenigstens zwei Schichten aus thermoplastischen Kunststoffen bestehen, wobei wenigstens eine Schicht ein Vlies aus thermoplastischen Fasern ist. Allgemein formuliert handelt es hierbei um bahnförmige Gebilde, bei denen ein Vlies oder mehrere Vliese mit wenigstens einer weiteren Warenbahn, welche als Film, Folie, als Faserbahn oder als ein weiteres Vlies ausgebildet sein kann, wenigstens durch Thermobondierung miteinander verbunden sind, wobei die weitere Warenbahn wenigstens eine von dem Vlies abweichende Eigenschaft aufweisen soll. Man versucht hier also unterschiedliche Eigenschaften jeglicher Art der sich unterscheidenden Schichten zu kombinieren wobei versucht wird, unterschiedliche Funktionssysteme der zweiten Schicht in Faserverband-Composites zu integrieren.

Die Vliesschicht dient in der Regel als Trägermaterial, welches eine gewisse mechanische Festigkeit gewährleistet und im Bedarfsfalle textilartige Eigenschaften aufweisen muß. Auch ein möglichst rascher Hindurchtritt von Flüssigkeiten, Feststoffen und gasförmigen Stoffen durch das Vlies kann für die Anwendung eine Rolle spielen.

Die zweite Schicht soll wenigstens eine von der durch ein Vlies gebildeten ersten Schicht abweichende Eigenschaft aufweisen. Beispielsweise kann die zweite Schicht eine wasserdichte und dampfdurchlässige Membran, eine - im Bedarfsfalle wasserdichte - gummielastische Folie, oder ein weiteres Vlies sein, wobei das zweite Vlies eine vom ersten Vlies abweichende Eigenschaft aufweist, beispielsweise kann das zweite Vlies hydrophob, schwerentflammbar, UV-beständig oder mit gegenüber dem ersten Vlies größeren Öffnungsstrukturen ausgerüstet sein.

Diese aus zwei unterschiedlichen Schichten bestehenden Verbundmaterialien kommen für einen weiten Anwendungsbereich in Frage, beispielsweise auf dem Textilsektor, im Hygienebereich als Bestandteil von Windeln, Damenhygieneprodukten, im medizinischen Bereich, beispielsweise als Abdecktuch, auf dem Bausektor, wo derartige Verbundmaterialien als Unterspannbahnen oder als diffusionsoffene Membranen eingesetzt werden, als Schutzbekleidung und im Bereich der Landwirtschaft als Insektenschutzplanen.

Je nach Anforderungsprofil bestehen dabei die Vliese aus Spinnfasern aus den Materialien PP, PE, PU, PA, PL, einem Co-polymer oder aus deren Homologen, Isomeren, sowie aus Gemischen dieser Rohstoffe.

Die beispielsweise als Membran ausgebildete zweite Schicht wiederum kann eine Kunststoffolie sein, welche entweder mikroporös ist oder den Transport von Wasserdampf durch die Membran auf chemischen Wege durch Adsorbtion/Desorbtion ermöglicht. Im letzteren Fall ist die Verwendung einer Folie aus PU, einem Blockcopolymer, einem Polyäther, Polyester oder aus anderen den Transport von Wasserdampf ermöglichenden hydrophilen Polymeren und Copolymeren denkbar.

Neben Kunststoffolien werden als Membran auch Fasermembranen, vorzugsweise aus Mikrofasern, eingesetzt, welche die geforderten Eigenschaften dadurch erhalten, daß bei deren Herstellung die Fasern verdichtet und/oder heiß versiegelt werden, oder ihre Eigenschaften auf andere Weise erhalten.

Die zweite Schicht kann, wie oben dargelegt, auch eine gummielastische Folie oder ein gummielastischer Film sein, was beispielsweise in der DE 42 43 012 C2 beschrieben ist.

Problematisch ist bei allen diesen Verbundmaterialien die dauerhafte und die beschädigungsfreie Verbindung der zweiten Schicht mit einer oder zwei Schichten eines Vlieses.

Um die Schichten miteinander zu verbinden, kommen vor allem drei Verfahren in Frage, nämlich das Verkleben der Schichten, beispielsweise durch ein Hot-Melt-Verfahren, das Thermobondieren, wobei eine Kombination beider Verfahren auch möglich ist, sowie die in situ Direktbeschichtung, insbesondere mit hydrophilen Polymeren.

Das Verkleben der Schichten ist dabei insofern problematisch, als daß der ganz- oder teilflächige Kleberauftrag die Luft- und Wasserdampfdurchlässigkeit beeinträchtigt bzw. vermindert und zudem zu einer signifikanten Versteifung des Verbundmaterials führt und damit den textilen Charakter des Verbundmaterials hinsichtlich seiner Weichheit, Drapierfähigkeit und den textilen Fall verschlechtert. Zudem führt der Auftrag von Klebern zu erhöhten Herstellungskosten.

Beim Thermobondieren wird versucht, die Schichten teilflächig entsprechend dem Gravurdessin der Bonding-Walzen über Druck, Temperatur und Zeit kraft- und formschlüssig miteinander zu verbinden. Dies ist insofern dann problematisch, wenn die als Membran, Folie oder Film ausgebildete zweite Schicht durch die scharfen Kanten der in die Oberfläche des Verbundmaterials eintauchenden Bonding-Stümpfe so geschädigt wird, daß die Dichtigkeiten gegenüber Flüssigkeiten signifikant abnehmen bzw. überhaupt nicht mehr vorhanden sind. Des weiteren wirken sich Geschwindigkeitsunterschiede der aus dem Walzendruckspalt mittels vorgegebener Zugspannung herausgezogenen Warenbahn gegenüber der Umfangsgeschwindigkeit der Bonding-Walzen selbst negativ aus.

Ist die zweite Schicht als gummielastische Folie ausgebildet entsteht neben der verminderten Wasserdichtheit das Problem, daß sich beim Thermobondieren keine kraft- und formschlüssige Verbindung der zwei Schichten erzielen läßt. Durch die heißen und scharfen Bonding-Stümpfe oder -Stempel wird die gummielastische Folie im Bereich der Bondingpunkte durchgebrannt und geht somit verloren. Die gummielastische Folie wird durch das Thermobondieren so verändert, daß sie sich nach dem Thermobondieren als netzartige Struktur darstellt, welche sich mit nur geringem Kraftaufwand vom Vlies abziehen läßt. Der Film ist nämlich nach dem Thermobondieren nicht homogen bzw. vollflächig in das Fasersystem des Vlieses integriert, sondern nur an den Bondingpunkten mit dem Vlies verbunden.

Ursache für die Beschädigung der zweiten Schicht sind dabei die scharfen Kanten der Bonding-Stümpfe. Bedingt durch die scharf abgegrenzte, plane und kleine Prägefläche findet beim Eintauchen der Bonding-Stümpfe in die Oberfläche der unverfestigten Faserstruktur des Fasergeleges oder des Vlieses ein Abquetschen bzw. ein Abschmelzen oder Abscheren einzelner oder mehrerer am Bondingprozeß teilnehmender Fasern statt. Dies führt dann dazu, daß das die Bonding-Zone umgebende Material verdichtet, verfestigt und verschweißt wird und seine Eigenschaften bezüglich des textilen Charakters unerwünscht verändert.

Bezüglich der zweiten Schicht führt die scharfkantige, plane und punktförmige Prägefläche sehr leicht zu einem Durchschmelzen oder zu einem Schmelzebruch dieser zweiten Schicht. Dies führt zu einem Verlust oder zu einer Verminderung der im Bedarfsfalle geforderten Eigenschaften, beispielsweise Flüssigkeitsdichtheit, insbesondere Wasserdichtheit, Rückstellkraft gummielastischer Systeme, Bakteriendichtheit, Virendichtheit, antibakterielle Ausrüstungen, Schwerentflammbarkeit, UV-Beständigkeit, antistatische Ausrüstung, oder anderes.

Aus der DE 195 23 497 A1 ist ein Kalander mit einer Druckwalze bekannt, die Walzenstacheln aufweist. Mittels dieser soll ein Prägemuster auf ein Vlies/Film-Laminat aufgebracht werden, wobei eine Bauschigkeit des Vlieses erhalten bleiben soll. Eine Verbindung von Film und Vlies in Form von Punktbereichen wird dabei vorzugsweise durch eine Schmelzfolie oder eine Schmelzkleberbeschichtung geschaffen. Aus der EP 0 374 910 A1 ist es bekannt, dass eine Saugschicht, die thermoplastische Fasern aufweist, mittels einer ersten Deckvliesschicht aus thermoplastischem Kunststoff und mit einer zweiten Deckvliesschicht aus thermoplastischem Kunststoff fixiert wird. Dazu wird die erste Deckvliesschicht in die Saugschicht eingedrückt und dabei soweit thermisch aufgeheizt, dass sich eine Verbindung durch aufgeschmolzenes Material zwischen den drei Schichten ergibt.

Aufgabe der Erfindung ist es, ein Verbundmaterial gemäß dem Oberbegriff des Patentanspruchs 1 zu schaffen, welches möglichst gute textile Eigenschaften aufweisen und gleichzeitig die jeweils gewünschte Eigenschaft der zweiten Schicht durch die Verbindung der unterschiedlichen Schichten miteinander durch Thermobondierung nicht negativ beeinflußt werden soll. Ferner ist es Aufgabe der Erfindung, ein Verfahren anzugeben, durch welches ein derartiges Verbundmaterial bereitgestellt werden kann.

Diese Aufgabe wird mit einem mehrschichtigen Verbundmaterial gelöst, welches die Merkmale des Patentanspruchs 1 aufweist, bzw. wird mit einem Verfahren gelöst, welches die Merkmale des Patentanspruchs 18 aufweist.

Erfindungsgemäß ist vorgesehen, daß die dreidimensionale Struktur wenigstens einer Bonding-Zone im Quer- und Längsschnitt die Form einer kurvenförmig ausgebildeten kantenlosen Mulde aufweist, welche durch einen ein Bonding-Zentrum bildenden Bodenbereich, sowie durch sich übergangslos anschließende Seitenbereiche gebildet ist, wobei die Schichten ausschließlich im Bereich des Bodenbereichs der Mulde miteinander thermobondiert sind.

Ein derartiges Verbundmaterial wird den gestellten Anforderungen an den textilen Charakter bzw. an die Beibehaltung der erforderlichen Eigenschaften der zweiten Schicht vollauf gerecht. Dadurch, daß die Bonding-Zone nicht wie bei herkömmlichen Lösungen scharfe und deutliche Kanten entsprechend der Geometrie der Bonding-Stümpfe aufweist und schon rein optisch punktförmig in Erscheinung tritt, ermöglicht die einer Halbkugel entsprechende oder von der Halbkugel abgeleitete oder sonstwie einem kantenlosen gerundeten Körper entsprechende Mulde ein sanftes rollendes Thermobondieren und damit eine Abkehr von dem bislang angewendeten prägenden oder stanzenden Thermobondieren.

Die sich an das Bonding-Zentrum übergangslos anschließenden Seitenbereiche gewährleisten dabei einen nahtlosen, sanften und fließenden Übergang zur Oberfläche des Verbundmaterials.

Bei der optischen Begutachtung eines erfindungsgemäßen mehrschichtigen Verbundmaterials fällt vor allem auf, daß keine scharfen, hart begrenzten Bonding-Punkte festzustellen sind, welche dem Verbundmaterial eine waffelähnliche Struktur verleihen. Es ist hierbei im Gegenteil festzustellen, daß die einzelnen Bonding-Zonen, welche nicht, wie sonst üblich, punktförmig ins Auge springen, keine scharfen Begrenzungsränder aufweisen, sondern ähnlich druckstellenartigen Vertiefungen in weichen Materialien in Erscheinung treten.

Bei weiterer sensitiver Begutachtung fällt vor allem der weiche, angenehme und textilärtige Griff des erfindunsgemäßen Verbundmaterials auf, welches ohne scharfkantige Oberflächenstrukturen auskommt. Daher eignet sich das erfindungsgemäße Verbundmaterial sehr gut dazu, direkt auf der Haut getragen zu werden.

Im Rahmen von Meßversuchen hat sich bezüglich eines erfindungsgemäßen Verbundmaterials aus einem Vlies und aus einer wasserdichten und wasserdampfdurchlässigen Membran aus PU gezeigt, daß die als kantenlose Mulde in Erscheinung tretende Bonding-Zone auch bezüglich der geforderten Eigenschaft der Wasserdampfdurchlässigkeit und der Wasserdichtheit vorteilhaft ist. Dadurch, daß es für das erfindungsgemäße Verbundmaterial nötig ist, die einzelnen Bonding-Zonen rollend in das Verbundmaterial einzubringen, findet das Thermobondieren sehr viel sanfter statt, als bei bislang bekannten Lösungen. Vor allem fällt auf, daß, auch unter extremen Versuchsbedingungen, eine Beschädigung oder ein Zerstören der Membran im Bereich der Bonding-Zonen nicht stattfindet, die Membran daher also an diesen Stellen ihre Eigenschaften bezüglich der Wasserdichtheit und der Dampfdurchlässigkeit unbeeinträchtigt beibehält. Ähnliches hat sich auch bezüglich eines Verbundmaterials aus einem Vlies und aus einer mikroporösen Folie aus PP gezeigt.

Kurz gefaßt wird mit dem erfindungsgemäßen mehrschichtigen Verbundmaterial eine Entkopplung des Interessenkonflikts hinsichtlich hoher Bondingintensität einerseits und optimalem Schutz von Membransystemen andererseits erreicht.

In einer alternativen Ausführungsform ist vorgesehen, daß die Bonding-Zone durch wenigstens eine Sicke gebildet ist, welche quer zu ihrem Verlauf kurvenförmig und kantenlos ausgebildet ist, wobei die Sicke durch einen ein Bonding-Zentrum bildenden Bodenbereich, sowie durch sich übergangslos anschließende Seitenbereiche gebildet ist, wobei die Schichten im Bereich des Bodenbereichs der Sicke miteinander thermobondiert sind.

In diesem Fall tritt die Bonding-Zone nicht als in sich abgeschlossenes und gegen die Oberfläche des Verbundmaterials abgegrenzte, punktförmige Zone in Erscheinung, sondern sie zieht sich in Form einer Sicke oder Rinne im Bedarfsfalle über die gesamte Breite der Warenbahn des Verbundmaterials. Ein derartiges linienförmiges Thermobondieren ist an sich zwar bekannt, doch wiesen die entsprechenden Bonding-Stümpfe bei diesen linienförmigen Thermobondierungs-Verfahren auch und stets kanntenförmige Bondingstümpfe auf. Da mit diesen linienförmigen Bonding-Stümpfen eine sehr viel größere Bonding-Fläche geschaffen wird, treten die eingangs geschilderten Probleme potenziert auf, da die relativ langen Seitenkanten derartiger Bonding-Stümpfe die Gefahr einer Verletzung des Membransystems noch erhöhen.

Werden dagegen, wie bei der Erfindung vorgesehen, kantenlose Bonding-Stümpfe, welche sich über die gesamte Breite der Bonding-Walze erstrecken können, eingesetzt, wird auch bei dieser alternativen Ausführungsform der Erfindung ein sanftes Bonding durch das behutsame Einrollen der länglichen Bonding-Stümpfe erreicht.

Bei dieser alternativen Ausführungsform kann weiter vorgesehen sein, daß sich die Sicke von einer ersten Seitenkante des Verbundmaterials bis zu einer zweiten Seitenkante des Verbundmaterials erstreckt, wobei ferner vorgesehen sein kann, daß das Verbundmaterial mit wenigstens zwei Sicken versehen ist, welche jeweils einen gemeinsamen kantenlosen Kreuzungsbereich aufweisen. Eine Vielzahl von Sicken verleihen dann dem Verbundmaterial eine gitterartige Struktur, wie es in einer weiteren praktischen Ausgestaltung der Erfindung vorgesehen ist.

Gemäß praktischen Ausgestaltungen der Erfindung ist vorgesehen, daß die Eintauchtiefe des Bonding-Zentrums in die zweite Schicht 5 - 50 % der Ausgangsdicke der zweiten Schicht beträgt, und/oder daß bei einer Eintauchtiefe von 20 µm eines Bonding-Stumpfes in die zweite Schicht die Prägefläche des Bonding-Zentrums 20 - 25 % der Fläche der Bonding-Zone entspricht.

Gemäß einer weiteren praktischen Ausgestaltung der Erfindung ist vorgesehen, daß das Vlies ein Spinnfaservlies mit Fasern aus PP, PE, PU, PA, PL, einem Copolymer, oder aus deren Homologen, Isomeren, sowie aus Gemischen dieser Rohstoffe ist.

Besonders vorteilhaft ist es, wenn die zweite Schicht ein Flächengewicht von 1 - 50 g/m² aufweist, insbesondere wenn die zweite Schicht ein Flächengewicht von 3 - 8 g/m² aufweist. Derartig geringe Flächengewichte ließen sich bislang in gattungsgemäßen Verbundmaterialien durch Thermobondierung nicht beschädigungsfrei integrieren. Da aber, worauf noch einzugehen sein wird, bei einem erfindungsgemäßen Verfahren sehr geringe Liniendruckverläufe ermöglicht werden, lassen sich nunmehr auch sehr dünne und leichte, die zweite Schicht bildende, Warenbahnen zur Herstellung des erfindungsgemäßen Verbundmaterials verwenden.

Ferner kann gemäß vorteilhaften Ausgestaltungen der Erfindung vorgesehen sein, daß die zweite Schicht eine flüssigkeitsdichte und gasdurchlässige Membran ist, beispielsweise eine als Kunststoffolie ausgebildete Membran, wobei die Membran mikroporös ausgerüstet sein kann, oder daß die Membran eine Fasermembran ist. Ferner ist vorgesehen, daß die zweite Schicht als gummielastische Folie ausgebildet ist, wobei diese wasserdicht und im Bedarfsfalle wasserdampfdurchlässig ausgebildet sein kann.

Die weitere Aufgabe vorliegender Erfindung, ein Verfahren zur Herstellung eines mehrschichtigen Verbundmaterials bereitzustellen, wird dadurch gelöst, daß beim Thermobondieren im Walzendruckspalt der Walzenanordnung die Bonding-Zone jeweils dadurch erzeugt wird, daß jeweils ein kantenloser Bonding-Stumpf wenigstens einer Bonding-Walze in beide Schichten mit kontinuierlicher Kraftübertragung über die Längsachsen der im Einflußbereich der Bonding-Zone befindlichen Fasern eingerollt wird.

Hierbei hat sich überraschend gezeigt, daß die kantenlose Prägefläche des Bonding-Stumpfes in den Randbereichen der Bonding-Zone nur eine Verdichtung des Fasergeleges bewirkt, nicht aber eine Verfestigung und Verschweißung. Dies wirkt sich sehr vorteilhaft auf die textilen Eigenschaften des Verbundmaterials aus.

Durch das rollende Eintauchen des Bonding-Stumpfes in das Verbundmaterial findet keine scherende, schneidende, prägende oder stanzende Bewegung des Bonding-Stumpfes statt, so daß hiermit der Gefahr begegnet werden kann, daß einzelne oder mehrere Fasern zerschnitten, gequetscht oder bereits in Seitenbereichen der Bonding-Zone verschweißt werden könnten.

Insbesondere in situ gefertigte Faservliesstoffe lassen sich durch das erfindungsgemäße Verfahren so behandeln, daß die außen liegenden Vliese in sich abrieb- und spaltsicher verfestigt werden, wobei die im Thermobondingprozeß beteiligte zweite Schicht ohne Beschädigung kraft- und formschlüssig mit dem außen liegenden Vlies verbunden wird.

Ein weiterer Vorteil des erfindungsgemäßen Verfahrens ist insbesondere in der Thermoverfestigung von Faservliesstoffen zu sehen. Der weiche Übergang der Bonding-Zone in die unverfestigte Faserstruktur des Fasergeleges hinein führt zu veränderten mechanisch-technologischen Eigenschaften des thermisch verfestigten Faserverbundes.

In praktischen Ausgestaltungen des erfindungsgemäßen Verfahrens ist vorgesehen, daß beim Thermobondieren die Liniendruckparameter variiert werden, daß während des Thermobondierens die Temperatur der Bonding-Walze variiert wird, und daß für das Thermobondieren ein Druck gewählt wird, welcher einem Liniendruckverlauf im Walzendruckspalt von 5 dN/cm bis 150 dN/cm Spaltbreite entspricht. Es war bislang nämlich insbesondere nicht möglich, eine wirksame Thermobondierung ohne signifikante Beschädigung der beteiligten Membranen bzw. Filme oder Folien mit derart geringen Liniendruckverläufen im Walzendruckspalt zu erreichen. Erstmals möglich wird dies nur durch das angegeben Verfahren.

In weiteren praktischen Ausgestaltungen der Erfindung ist vorgesehen, daß die Bonding-Walze Bondingstümpfe mit kantenlosen Prägeflächen aufweist, daß die Eintauchtiefe der Bonding-Stümpfe 5 bis 80 % der Ausgangsdicke des Verbundmaterials beträgt und daß das Verfahren mit einer Walzenanordnung, bestehend aus einer Bonding-Walze und einer planen Gegenwalze, durchgeführt wird. Alternativ ist vorgesehen, daß das Verfahren mit einer Walzenanordnung, bestehend aus zwei kongruenten Bonding-Walzen, durchgeführt wird, wobei die Bonding-Walzen jeweils an ihren Mantelflächen mit kantenlosen Bonding-Stümpfen versehen sind. Ferner kann vorgesehen sein, daß das Verfahren mit einer Bonding-Walze und einer im Abstand zur Mantelfläche der Bonding-Walze angeordneten Ultraschall-Schweißquelle ausgeführt wird, wobei die Bonding-Walze an ihrer Mantelfläche mit Bonding-Stümpfen mit kantenlosen Prägeflächen versehen ist.

In einer praktischen Ausgestaltung des erfindungsgemäßen Verfahrens ist ferner vorgesehen, daß die Schichten des Verbundmaterials zusätzlich zum Thermobondieren kongruent zu den gewählten Bonding-Pattern, d.h. genau in der Bonding-Zone, miteinander verklebt werden.

Durch das zusätzliche Verkleben der beiden Schichten im Bereich der Bonding-Zonen können beispielsweise auf relativ einfache Weise dem Kleber zugesetzte Additive in das Verbundmaterial eingebracht werden, welche sonst nur schwer integrierbar wären. Solche Additive können die UV-Beständigkeit, die Schwerentflammbarkeit oder die Drapierfähigkeit des Verbundmaterials verbessern, oder sie können das Verbundmaterial zusätzlich hydrophilieren bzw. hydrophobieren.

Weitere Vorteile und Ausgestaltungen der Erfindung werden anhand von Ausführungsbeispielen in der Zeichnung, in der Beschreibung sowie in den Patentansprüchen beschrieben. In der Zeichnung zeigen:
- Fig. 1: in vergrößertem Maßstab einen Teilbereich eines Ausführungsbeispiels des erfindungsgemäßen Verbundmaterials im Längsschnitt,
- Fig. 2: schematisch einen Verfahrensschritt zur Herstellung eines erfindungsgemäßen Verbundmaterials,
- Fig. 3: schematisch einen Eintauchvorgang eines Bonding-Stumpfes in ein erfindungsgemäßes Verbundmaterial,
- Fig. 4: einen Ausschnitt eines zweiten Ausführungsbeispiels eines erfindungsgemäßen Verbundmaterials in perspektivischer Ansicht im vergrößertem Maßstab,
- Fig. 5: einen Auschnitt des Ausführungsbeispiels eines erfindungsgemäßen Verbundmaterials aus Fig. 1 in stark vergrößertem Maßstab, und
- Fig. 6: einen Ausschnitt eines dritten Ausführungsbeispiels eines erfindungsgemäßen Verbundmaterials in perspektivischer Ansicht in vergrößertem Maßstab.

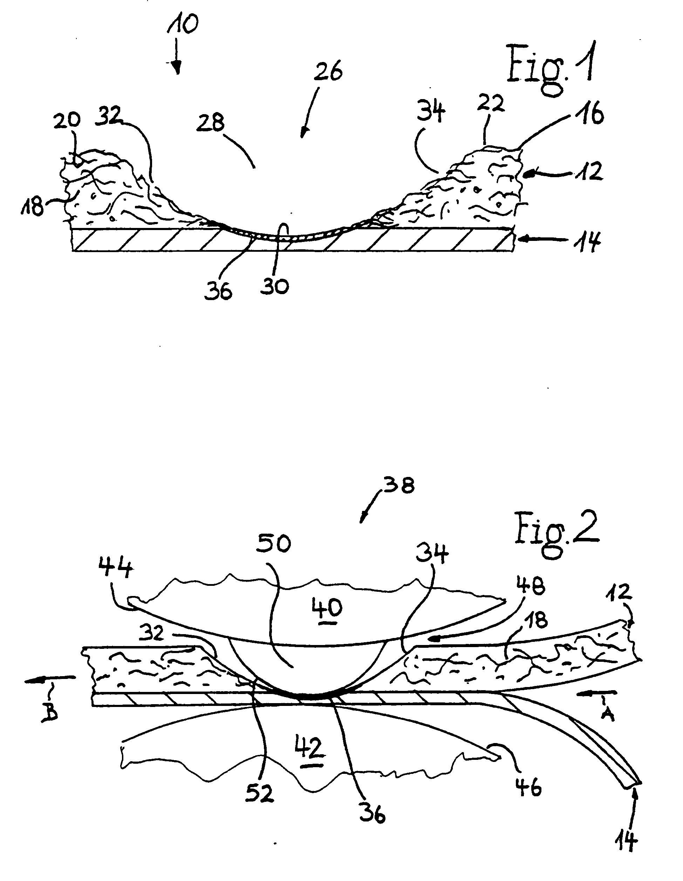

In Fig. 1 ist ein Ausschnitt eines Ausführungsbeispiels eines erfindungsgemäßen Verbundmaterials 10 im Längsschnitt dargestellt. Dieses weist eine erste Schicht 12 und eine zweite Schicht 14 auf, wobei die Schicht 12 ein Vlies 16 mit einer Vielzahl von ein Fasergelege 18 bildenden Fasern 20 ist. Eine Oberfläche 22 des Vlieses 16 bildet gleichzeitig die Oberfläche 22 des Verbundmaterials 10.

Die Schicht 14 stellt sich als flüssigkeitsdichte und gasdurchlässige Membran 24 dar, welche zumindest im Bereich einer Bonding-Zone 26 fest mit dem Vlies 16 verbunden ist. Unter flüssigkeitsdicht und gasdurchlässig wird ganz allgemein die Eigenschaft der zweiten Schicht 14 verstanden, gegen den Einsatzbereich des Verbundmaterials 10 betreffende Flüssigkeiten - Wasser, Blut, Urin, Säuren, Basen, und dergleichen - dicht bzw. für den Einsatzzweck des Verbundmaterials relevante Gase und gashaltige Stoffe - insbesondere Wasserdampf, andere Dämpfe, Rauchgas, Stäube und andere Gase - offen, d.h. durchlässig ist.

Die in Fig. 1 dargestellte zweite Schicht 14 ist im speziellen wasserdicht und wasserdampfdurchlässig ausgebildet.

Die Bonding-Zone 26 weist im Quer- wie im Längsschnitt die Form einer kurvenförmig ausgebildeten kantenlosen Mulde 28 auf, welche durch ein Bodenbereich 30 sowie durch sich übergangslos anschließende Seitenbereiche 32, 34 gebildet ist.

Diese Seitenbereiche 32, 34 gehen wiederum übergangslos in die Oberfläche 22 des Verbundmaterials 10 über. Der Bereich, in dem die eigentliche Thermobondierung der beiden Schichten 12, 14 miteinander stattgefunden hat, wird durch den Bodenbereich 30 der Bonding-Zone 26 gebildet. Dieser Bodenbereich 30 stellt daher ein Bonding-Zentrum 36 dar. In diesem Bonding-Zentrum 36 sind die Materialien der Schichten 12, 14 unlösbar miteinander verschweißt. Dagegen hat in den Seitenbereichen 32, 34 der Bonding-Zone keine Verfestigung und keine Verschweißung, sondern nur eine Verdichtung stattgefunden.

In Fig. 2 ist schematisch ein Verfahren zur Herstellung eines Verbundmaterials 10 mittels einer Walzenanordnung 38 dargestellt. Die Walzenanordnung 38 besteht aus einer Bonding-Walze 40 und aus einer Gegenwalze 42 mit plangeschliffener Mantelfläche 46. Zwischen sich gegenüberliegenden Mantelflächen 44, 46 der Bonding-Walze 40 bzw. der Gegenwalze 42 befindet sich ein Abstand, welcher einen Walzendruckspalt 48 definiert. In diesem Walzendruckspalt 48 werden die noch unverbundenen Schichten 12, 14 in Richtung des Pfeiles A in die Walzenanordnung 38 eingeführt; das fertige Verbundmaterial 10 verläßt die Walzenanordnung 38 entsprechend aus dem Walzendruckspalt 48 in Richtung des Pfeiles B.

An der Mantelfläche 44 der Bonding-Walze 40 ist eine Vielzahl von Bonding-Stümpfen 50 angeordnet, von denen in Fig. 2 nur ein Bonding-Stumpf 50 dargestellt ist. Dieser Bonding-Stumpf 50 weist eine Prägefläche 52 auf, welche keine scharfen Kanten aufweist. Wie in Fig. 2 dargestellt, ist die Prägefläche 52 in ihrer Form halbkugelähnlich.

Durch die Rotation der Bonding-Walze 40 und durch die Oberflächengestaltung der Prägefläche 52 rollt sich beim Einführen der Schichten 12, 14 in den Walzendruckspalt 48 der Bonding-Stumpf 50 mit seiner Prägefläche 52 in das Fasergelege 18 ein. Durch die Form der Prägefläche 52 bedingt, wird erreicht, daß eine Thermobondierung nur im Bereich des Bonding-Zentrums 36 erfolgt, in den Seitenbereichen 32, 34 jedoch weder eine Thermobondierung noch eine Verdichtung der Fasern 20 im Einflußbereich der Bonding-Zone 26 erfolgt.

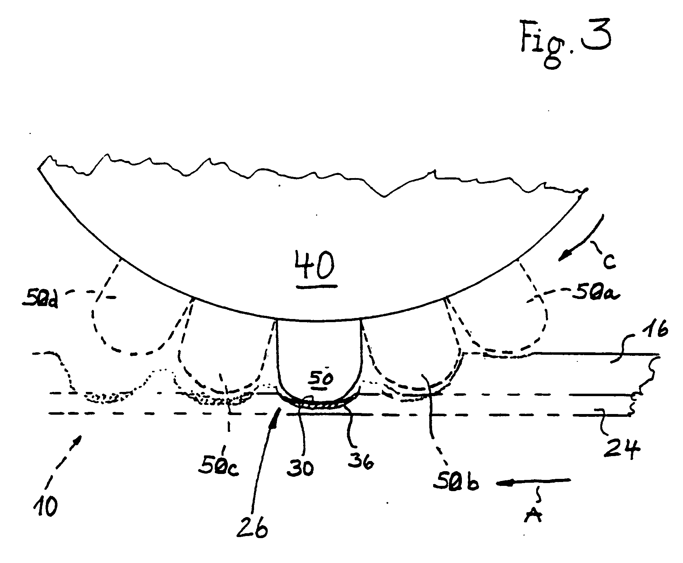

In Fig. 3 ist schematisch das Eintauchen oder Einrollen eines Bonding-Stumpfes 50 in die Schichten 12, 14 des Verbundmaterials 10 und das Auftauchen oder Ausrollen aus der Bonding-Zone 26 dargestellt. Hierbei sind einzelne Phasen des Eintauchens bzw. des Auftauchens durch in Strichlinien angedeutete Bonding-Stümpfe 50a bis 50d dargestellt, mit denen verschiedene Situationen des Bonding-Stumpfes 50 während seiner Drehung illustrieren. Mit dem Bonding-Stumpf 50a ist der Beginn des Eintauchens, mit dem Bonding-Stumpf 50d ist das Ende der Tauchphase und damit das Ende des Thermobondierens dargestellt, entsprechend der durch den Pfeil C angedeuteten Drehrichtung der Bonding-Walze 40.

Zu erkennen ist hier vor allem, daß durch die kantenlose, relativ große Prägefläche 52, welche eine relativ große Oberfläche besitzt,des Bonding-Stumpfes 50 in keiner Phase die Gefahr besteht, daß einzelne Fasern des Vlieses 16 außerhalb des Bonding-Zentrums 36 abgeschnitten, gequetscht oder verschweißt werden könnten. Denn durch die Geometrie der Prägefläche 52 kann dieser Gefahr wirksam begegnet werden.

Ferner ist in Fig. 3 verdeutlicht, daß zu keinem Zeitpunkt die Gefahr besteht, daß irgendein Teilbereich der Prägefläche 52 die Membran 24 verletzen könnte. Diese Gefahr bestünde, wenn die Prägefläche 52 an irgendeiner Stelle eine scharfe Kante aufweisen würde.

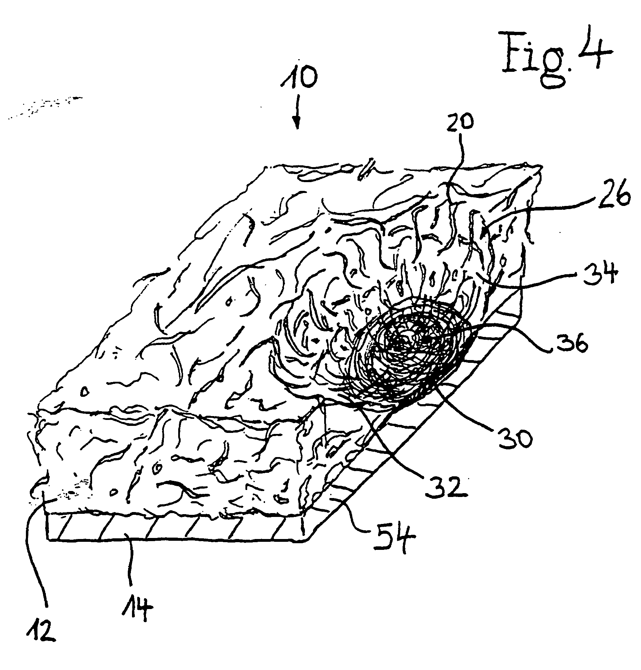

In Fig. 4 ist ein zweites Ausführungsbeispiel eines erfindungsgemäßen Verbundmaterials 10 in perspektivischer Ansicht in stark vergrößertem Maßstab dargestellt. Bei diesem ist die zweite Schicht 14 eine gummielastische Folie 54.

In diesem in Fig. 4 dargestellten Teilstück eines Verbundmaterials 10 ist ein Schnitt längs durch die Bonding-Zone 26 geführt. Zu erkennen ist hier vor allem, daß die eigentliche Thermobondierung nur im Bönding-Zentrum 36 - welches gleichzeitig den Bodenbereich 30 der Bonding-Zone bildet - stattgefunden hat, während in den Seitenbereichen 32, 34 die Fasern 20 lediglich umorientiert, aber nicht verschweißt oder verdichtet sind.

Das Material der gummielastischen Folie 54 hat sich im Bereich des Bonding-Zentrums 36 kraft- und formschlüssig mit dem Material des Vlieses 16 verbunden; das Thermobondieren hat aber nicht zu einem Durchbrennen oder zu einem Schmelzebruch des Materials der gummielastischen Folie geführt.

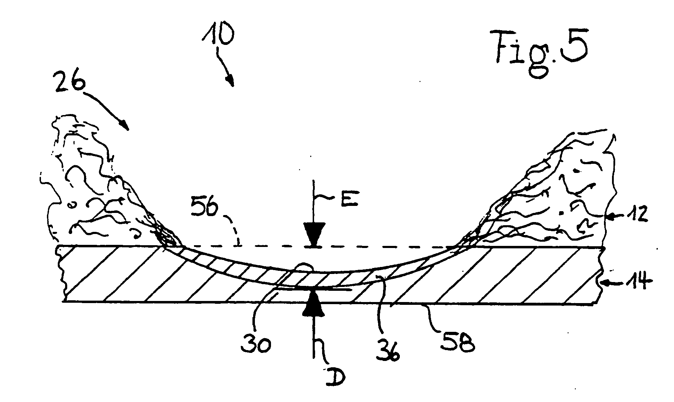

In Fig. 5 ist in stark vergrößertem Maßstab die Bonding-Zone 26 des Verbundmaterials 10 aus Fig. 1 dargestellt. Insbesondere ist in Fig. 5 das Verhältnis von Eintauchtiefe des in Fig. 5 nicht dargestellten Bonding-Stumpfes 50 im Verhältnis zur durch das Bonding-Zentrum 36 wirksamen Bonding-Prägefläche dargestellt. Hierbei ist die Eintauchtiefe durch die Pfeile D, E angedeutet; der Pfeil E markiert die ursprüngliche Oberfläche 56 der zweiten Schicht 14 vor dem Eintauchen des Bonding-Stumpfes 50, der Pfeil D markiert eine Stelle der Bonding-Zone 36, welche der Unterseite 58 der zweiten Schicht 14 nach erfolgtem Eintauchen des Bonding-Stumpfes am nächsten ist.

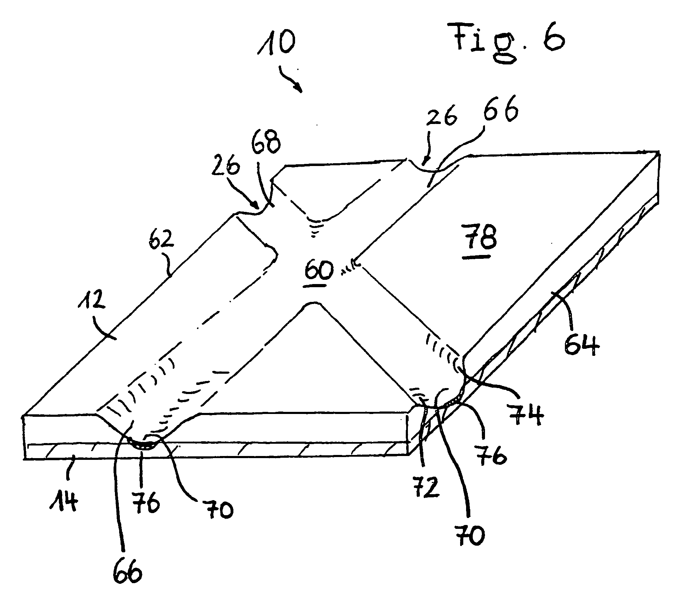

In Fig. 6 ist ein drittes Ausführungsbeispiel eines erfindungsgemäßen Verbundmaterials 10 in perspektivischer Ansicht in stark vergrößertem Maßstab dargestellt. Im Gegensatz zu den Ausführungsbeispielen eines Verbundmaterials 10 gemäß den Fig. 1 - 5 weist das Verbundmaterial 10 gemäß Fig. 6 keine Bonding-Zone 26 in Form einer Mulde 28, sondern eine Bonding-Zone 26 in Form von zwei Rinnen oder Sicken 66, 68 auf. Diese Sicken 66, 68 weisen jeweils einen Bodenbereich 70 und Seitenbereiche 72, 74 auf. Der Bodenbereich 70 bildet dabei das eigentliche Bonding-Zentrum 76.

Im gezeigten Ausführungsbeispiel erstreckt sich wenigstens die Sicke 68 von einer Seitenkante 64 zu einer zweiten Seitenkante 62 des Verbundmaterials 10.

Die sich kreuzenden Sicken 66, 68 weisen einen Kreuzungsbereich 60 auf, welcher - ebenso wie die Sicken 66, 68 quer zu ihrem Verlauf - völlig kantenlos ist.

Bei einem Verbundmaterial 10 mit einer Vielzahl sich kreuzender Sicken 66, 68 wird dem Verbundmaterial 10 eine gitter- oder netzartige dreidimensionale Struktur verliehen, wobei die Partien des Verbundmaterials 10 zwischen den Sicken 66, 68 als kissenartige Strukturen 78 in Erscheinung treten.

## Patentansprüche

1. Mehrschichtiges Verbundmaterial (10) aus wenigstens zwei Schichten (12, 14) aus thermoplastischen Kunststoffen, wobei wenigstens eine erste Schicht (12) ein Vlies (16) aus thermoplastischen Fasern (20) ist, wobei die Schichten (12, 14) mindestens durch Thermobondierung an Bonding-Zonen (26) miteinander verbunden sind, wobei im Bereich der Bonding-Zonen (26) die Materialien der Schichten (12, 14) zumindest teilweise miteinander verschmolzen sind und wobei die Bonding-Zonen (26) dem Verbundmaterial (10) eine dreidimensionale Struktur verleihen, **dadurch gekennzeichnet, daß** die dreidimensionale Struktur wenigstens einer Bonding-Zone (26) im Quer- und Längsschnitt die Form einer kurvenförmig ausgebildeten kantenlosen Mulde (28) aufweist, welche durch einen ein Bonding-Zentrum (36) bildenden Bodenbereich (30) sowie durch sich übergangslos anschließende Seitenbereiche (32, 34) gebildet ist, wobei die Schichten (12, 14) ausschließlich im Bereich des Bodenbereichs (30) der Mulde (28) miteinander thermobondiert sind und wobei die Thermobondierung durch die erste Schicht (12) hinein in die zweite Schicht (14) erfolgt ist.

2. Mehrschichtiges Verbundmaterial (10) aus wenigstens zwei Schichten (12, 14) aus thermoplastischen Kunststoffen, wobei wenigstens eine erste Schicht (12) ein Vlies (16) aus thermoplastischen Fasern (20) ist, wobei die Schichten (12, 14) mindestens durch Thermobondierung an Bonding-Zonen (26) miteinander verbunden sind, wobei im Bereich der Bonding-Zonen (26) die Materialien der Schichten (12, 14) zumindest teilweise miteinander verschmolzen sind und wobei die Bonding-Zonen (26) dem Verbundmaterial (10) eine dreidimensionale Struktur verleihen, **dadurch gekennzeichnet, daß** die Bonding-Zone (26) durch wenigstens eine Sicke (66; 68) gebildet ist, welche quer zu ihrem Verlauf kurvenförmig und kantenlos ausgebildet ist, wobei die Sicke (66; 68) durch einen ein Bonding-Zentrum (76) bildenden Bodenbereich (70), sowie durch sich übergangslos anschließende Seitenbereiche (72, 74) ausgebildet ist, wobei die Schichten (12, 14) ausschließlich im Bereich des Bodenbereichs (70) der Sicke (66; 68) miteinander thermobondiert sind und wobei die Thermobondierung durch die erste Schicht (12) hinein in die zweite Schicht (14) erfolgt ist.

3. Mehrschichtiges Verbundmaterial nach Anspruch 2, **dadurch gekennzeichnet, daß** sich die Sicke (66; 68) von einer ersten Seitenkante (64) des Verbundmaterials (10) bis zu einer zweiten Seitenkante (62) des Verbundmaterials (10) erstreckt.

4. Mehrschichtiges Verbundmaterial nach Anspruch 2 oder 3, **dadurch gekennzeichnet, daß** das Verbundmaterial mit wenigstens zwei Sicken (66; 68) versehen ist, welche jeweils einen gemeinsamen kantenlosen Kreuzungsbereich (60) aufweisen.

5. Mehrschichtiges Verbundmaterial nach Anspruch 4, **dadurch gekennzeichnet, daß** eine Vielzahl von Sicken (66; 68) dem Verbundmaterial eine gitterartige Struktur verleihen.

6. Mehrschichtiges Verbundmaterial nach Anspruch 1, **dadurch gekennzeichnet, daß** die Eintauchtiefe des Bonding-Zentrums (36) in die zweite Schicht (14) 5 - 50 % der Ausgangsdicke der zweiten Schicht (14) beträgt.

7. Mehrschichtiges Verbundmaterial nach einem der Ansprüche 1 bis 6, **dadurch gekennzeichnet, daß** bei einer Eintauchtiefe von 20 µm eines Bonding-Stumpfes (50) in die zweite Schicht (14) die Prägefläche des Bonding-Zentrums (36) 20 - 25 % der Fläche der Bonding-Zone (26) entspricht.

8. Mehrschichtiges Verbundmaterial nach einem der Ansprüche 1 - 7, **dadurch gekennzeichnet, daß** das Vlies (16) ein Spinnfaservlies mit Fasern (20) aus PP, PE, PU, PA, PL, einem Co-polymer, oder aus deren Homologen, Isomeren, sowie aus Gemischen dieser Rohstoffe ist.

9. Mehrschichtiges Verbundmaterial nach einem der Ansprüche 1 - 8, **dadurch gekennzeichnet, daß** die zweite Schicht (14) ein Flächengewicht von 1 - 50 g/m² aufweist.

10. Mehrschichtiges Verbundmaterial nach Anspruch 9, **dadurch gekennzeichnet, daß** die zweite Schicht (14) ein Flächengewicht von 3 - 8 g/m² aufweist.

11. Mehrschichtiges Verbundmaterial nach einem der Ansprüche 1 bis 10, **dadurch gekennzeichnet, daß** die zweite Schicht (14) eine flüssigkeitsdichte und gasdurchlässige Membran (24) ist.

12. Mehrschichtiges Verbundmaterial nach Anspruch 11, **dadurch gekennzeichnet, daß** die Membran (24) eine Kunststoffolie ist.

13. Mehrschichtiges Verbundmaterial nach Anspruch 12, **dadurch gekennzeichnet, daß** die Membran (24) mikroporös ist.

14. Mehrschichtiges Verbundmaterial nach Anspruch 11 oder 13, **dadurch gekennzeichnet, daß** die Membran (24) eine Fasermembran ist.

15. Mehrschichtiges Verbundmaterial nach einem der Ansprüche 1 - 10, **dadurch gekennzeichnet, daß** die zweite Schicht (14) eine gummielastische Folie (54) ist.

16. Mehrschichtiges Verbundmaterial nach Anspruch 15, **dadurch gekennzeichnet, daß** die gummielastische Folie (54) wasserdicht ist.

17. Mehrschichtiges Verbundmaterial nach Anspruch 16, **dadurch gekennzeichnet, daß** die gummielastische Folie (54) wasserdampfdurchlässig ist.

18. Verfahren zur Herstellung eines mehrschichtigen Verbundmaterials (10) aus wenigstens zwei Schichten (12, 14) aus thermoplastischen Kunststoffen, wobei wenigstens eine erste Schicht (12) ein Vlies (16) aus thermoplastischen Fasern (20) ist, wobei die Schichten (12, 14) mindestens durch Thermobondierung mittels einer Walzenanordnung (38) an Bonding-Zonen (26) miteinander verbunden werden, wobei im Bereich der Bonding-Zonen (26) die Materialien der Schichten (12, 14) zumindest teilweise miteinander verschmolzen werden und wobei durch die Bonding-Zonen (26) dem Verbundmaterial (10) eine dreidimensionale Struktur verliehen wird, **dadurch gekennzeichnet, daß** beim Thermobondieren in einem Walzendruckspalt (48) der Walzenanordnung (38) die Bonding-Zone (26) jeweils **dadurch** erzeugt wird, daß jeweils ein kantenloser Bonding-Stumpf (50) wenigstens einer Bonding-Walze (40) in beide Schichten (12, 14) mit kontinuierlicher Kraftübertragung über die Längsachsen der im Einflußbereich der Bonding-Zone (26) befindlichen Fasern (20) eingerollt wird.

19. Verfahren nach Anspruch 18, **dadurch gekennzeichnet, daß** beim Thermobondieren die Liniendruckparameter variiert werden.

20. Verfahren nach Anspruch 17 oder 18, **dadurch gekennzeichnet, daß** während des Thermobondierens die Temperatur der Bonding-Walze (40) variiert wird.

21. Verfahren nach einem der Ansprüche 18 - 20, **dadurch gekennzeichnet, daß** für das Thermobondieren ein Druck gewählt wird, welcher einem Liniendruckverlauf im Walzendruckspalt (48) von 5 dN/cm bis 150 dN/cm Spaltbreite entspricht.

22. Verfahren nach einem der Ansprüche 18 - 21, **dadurch gekennzeichnet, daß** die Bonding-Walze (40) Bonding-Stümpfe (50) mit kantenlosen Prägeflächen (52) aufweist.

23. Verfahren nach einem der Ansprüche 18 - 22, **dadurch gekennzeichnet, daß** die Eintauchtiefe der Bonding-Stümpfe (50) 5 bis 80 % der Ausgangsdicke des Verbundmaterials (10) beträgt.

24. Verfahren nach einem der Ansprüche 18 - 23, **dadurch gekennzeichnet, daß** das Verfahren mit einer Walzenanordnung (38), bestehend aus einer Bonding-Walze (40) und einer planen Gegenwalze (42), durchgeführt wird.

25. Verfahren nach einem der Ansprüche 18 - 23, **dadurch gekennzeichnet, daß** das Verfahren mit einer Walzenanordnung (38), bestehend aus zwei kongruenten Bonding-Walzen (40) durchgeführt wird, wobei die Bonding-Walzen (40) jeweils an ihren Mantelflächen (44) mit Bonding-Stümpfen (50) mit kantenlosen Prägeflächen (52) versehen sind.

26. Verfahren nach einem der Ansprüche 18 - 23, **dadurch gekennzeichnet, daß** das Verfahren mit einer Bonding-Walze (40) und einer im Abstand zur Mantelfläche (44) der Bonding-Walze (40) angeordneten Ultraschall-Schweißquelle ausgeführt wird, wobei die Bonding-Walze (40) an ihrer Mantelfläche (44) mit Bonding-Stümpfen (50) mit kantenlosen Prägeflächen (52) versehen ist.

27. Verfahren nach einem der Ansprüche 18 - 26, **dadurch gekennzeichnet, daß** die Schichten (12, 14) des Verbundmaterials (10) im Bereich der Bonding-Zonen (26) zusätzlich zum Thermobondieren miteinander verklebt werden.

## Claims

1. Multi-layer composite material (10) comprising at least two layers (12, 14) made of thermoplastic plastic materials, at least one first layer (12) being a non-woven fabric (16) made of thermoplastic fibres (20), the layers (12, 14) being joined together at bonding zones (26) at least by thermobonding, the materials of the layers (12, 14) being at least partly fused with each other in the area of the bonding zones (26), and the bonding zones (26) imparting a three-dimensional structure to the composite material (10),
**characterised in that**
the three-dimensional structure of at least one bonding zone (26) has, in both cross-section and lengthwise section, the shape of a curved, edgeless hollow (28), which is made up of a base area (30) that forms the centre (36) of the bond, and of side areas (32, 34) that adjoin without any transition, the layers (12, 14) being thermobonded with each other only in the region of the base area (30) of the hollow (28), and the thermobonding process having been effected by the first layer (12) into the second layer (14).

2. Multi-layer composite material (10) comprising at least two layers (12, 14) made of thermoplastic plastic materials, at least one first layer (12) being a non-woven fabric (16) made of thermoplastic fibres (20), the layers (12, 14) being joined together at bonding zones (26) at least by thermobonding, the materials of the layers (12, 14) being at least partly fused with each other in the area of the bonding zones (26), and the bonding zones (26) imparting a three-dimensional structure to the composite material (10),
**characterised in that**
the bonding zone (26) is formed by at least one crimp (66; 68), which is formed in a curved and edgeless manner at right angles to the direction in which it runs, the crimp (66; 68) being made up of a base area (70) that forms the centre (76) of the bond, and of side areas (72, 74) that adjoin without any transition, the layers (12, 14) being thermobonded with each other only in the region of the base area (70) of the crimp (66; 68), and the thermobonding process having been effected by the first layer (12) into the second layer (14).

3. Multi-layer composite material as in claim 2,
**characterised in that**
the crimp (66; 68) extends from a first side edge (64) of the composite material (10) to a second side edge (62) of the composite material (10).

4. Multi-layer composite material as in claim 2 or 3,
**characterised in that**
the composite material has at least two crimps (66; 68), which in each case have a mutual edgeless intersection area (60).

5. Multi-layer composite material as in claim 4,
**characterised in that**
a large number of crimps (66; 68) impart a lattice-like structure to the composite material.

6. Multi-layer composite material as in claim 1,
**characterised in that**
the depth of submergence of the bonding centre (36) into the second layer (14) is between 5 and 50 % of the initial thickness of the second layer (14).

7. Multi-layer composite material as in one of claims 1 to 6,
**characterised in that**
where the depth of submergence of a bonding stud (50) into the second layer (14) is 20 µm, the imprinted area of the bonding centre (36) is between 20 and 25 % of the area of the bonding zone (26).

8. Multi-layer composite material as in one of claims 1 to 7,
**characterised in that**
the non-woven fabric (16) is a staple fibre non-woven fabric with fibres (20) made from PP, PE, PU, PA, PL, a co-polymer, or from their homologues and isomers, and from mixtures of these raw materials.

9. Multi-layer composite material as in one of claims 1 to 8,
**characterised in that**
the second layer (14) has a weight of between 1 and 50 g / m².

10. Multi-layer composite material as in claim 9,
**characterised in that**
the second layer (14) has a weight of between 3 and 8 g /m².

11. Multi-layer composite material as in one of claims 1 to 10,
**characterised in that**
the second layer (14) is a membrane (24) which is impermeable to liquids and permeable to gas.

12. Multi-layer composite material as in claim 11,
**characterised in that**
the membrane (24) is a plastic film.

13. Multi-layer composite material as in claim 12,
**characterised in that**
the membrane (24) is microporous.

14. Multi-layer composite material as in claim 11 or 13,
**characterised in that**
the membrane (24) is a fibre membrane.

15. Multi-layer composite material as in one of claims 1 to 10,
**characterised in that**
the second layer (14) is an elastomeric film (54).

16. Multi-layer composite material as in claim 15,
**characterised in that**
the elastomeric film (54) is impermeable to water.

17. Multi-layer composite material as in claim 16,
**characterised in that**
the elastomeric film (54) is permeable to water vapour.

18. Method of producing a multi-layer composite material (10) comprising at least two layers (12, 14) made of thermoplastic plastics, at least one first layer (12) being a non-woven fabric (16) made of thermoplastic fibres (20), the layers (12, 14) being joined together at bonding zones (26) at least by thermobonding by means of a roller array (38), the materials of the layers (12, 14) being at least partly fused together in the area of the bonding zones (26), and a three-dimensional structure being imparted to the composite material (10) by the bonding zones (26),
**characterised in that**,
during the thermobonding process in a roller pressure gap (48) of the roller array (38), each bonding zone (26) is formed by in each case one edgeless bonding stud (50) of at least one bonding roller (40) being rolled into both layers (12, 14) with a continuous transmission of force over the lengthwise axes of the fibres (20) located in the affected area of the bonding zone (26).

19. Method as in claim 18,
**characterised in that**
during the thermobonding process the line pressure parameters are varied.

20. Method as in claim 17 or 18,
**characterised in that**
during the thermobonding process the temperature of the bonding roller (40) is varied.

21. Method as in one of claims 18 to 20,
**characterised in that**
a pressure is selected for the thermobonding process which corresponds to a line pressure distribution in the roller pressure gap (48) of between 5 dN / cm and 150 dN / cm gap width.

22. Method as in one of claims 18 to 21,
**characterised in that**
the bonding roller (40) has bonding studs (50) with edgeless imprinting surfaces (52).

23. Method as in one of claims 18 to 22,
**characterised in that**
the depth of submergence of the bonding studs (50) is between 5 and 80 % of the initial thickness of the composite material (10).

24. Method as in one of claims 18 to 23,
**characterised in that**
the method is carried out using a roller array (38) which comprises a bonding roller (40) and a smooth counter-roller (42).

25. Method as in one of claims 18 to 23,
**characterised in that**
the method is carried out using a roller array (38) which comprises two congruent bonding rollers (40), each of the bonding rollers (40) having, on its outer surface (44), bonding studs (50) with edgeless imprinting surfaces (52).

26. Method as in one of claims 18 to 23,
**characterised in that**
the method is carried out using a bonding roller (40) and an ultrasonic welding source which is positioned at a distance from the outer surface (44) of the bonding roller (40), the bonding roller (40) having, on its outer surface (44), bonding studs (50) with edgeless imprinting surfaces (52).

27. Method as in one of claims 18 to 26,
**characterised in that**
the layers (12, 14) of the composite material (10) are, in addition to the thermobonding process, also glued together in the area of the bonding zones (26).

## Revendications

1. Matériau composite à plusieurs couches (10) comprenant au moins deux couches (12, 14) en matières thermoplastiques, dans lequel au moins une première couche (12) est un non tissé (16) composé de fibres thermoplastiques (20), les couches (12, 14) étant reliées entre elles au moins au moyen d'un thermoliage au niveau de zones de liaison (26), les matériaux des couches (12, 14) étant fusionnés entre eux au moins partiellement au niveau des zones de liaison (26) et ces zones de liaison (26) conférant au matériau composite (10) une structure en trois dimensions, **caractérisé en ce que** la structure en trois dimensions d'au moins une zone de liaison (26) présente, en coupe longitudinale et transversale, la forme d'une gouttière courbée sans rebords (28) qui est formée d'une zone de fond (30) formant un centre de liaison (36) et de zones latérales (32, 34) reliées entre elles sans transition, les couches (12, 14) étant thermoliées entre elles exclusivement au niveau de la zone de fond (30) de la gouttière (28) et le thermoliage étant réalisé au moyen de la première couche (12) entrant dans la deuxième couche (14).

2. Matériau composite à plusieurs couches (10) comprenant au moins deux couches (12, 14) en matières thermoplastiques, dans lequel au moins une première couche (12) est un non tissé (16) composé de fibres thermoplastiques (20), les couches (12, 14) étant reliées entre elles au moins au moyen d'un thermoliage au niveau de zones de liaison (26), les matériaux des couches (12, 14) étant fusionnés entre eux au moins partiellement au niveau des zones de liaison (26) et ces zones de liaison (26) conférant au matériau composite (10) une structure en trois dimensions, **caractérisé en ce que** la zone de liaison (26) est formée d'au moins une nervure (66, 68) courbée transversalement à son tracé et sans rebords, la nervure (66, 68) étant formée d'une zone de fond (70) formant un centre de liaison (76) ainsi que de zones latérales (72, 74) reliées entre elles sans transition, les couches (12, 14) étant thermoliées entre elles exclusivement au niveau de la zone de fond (70) de la nervure (66, 68) et le thermoliage étant réalisé au moyen de la première couche (12) entrant dans la deuxième couche (14).

3. Matériau composite à plusieurs couches selon la revendication 2, **caractérisé en ce que** la nervure (66, 68) s'étend d'un premier rebord latéral (64) du matériau composite (10) jusqu'à un deuxième rebord latéral (62) du matériau composite (10).

4. Matériau composite à plusieurs couches selon la revendication 2 ou 3, **caractérisé en ce que** le matériau composite est muni d'au moins deux nervures (66, 68) qui présentent chacune une zone d'intersection commune (60) sans rebord.

5. Matériau composite à plusieurs couches selon la revendication 4, **caractérisé en ce que** plusieurs nervures (66, 68) confèrent au matériau composite une structure entrecroisée.

6. Matériau composite à plusieurs couches selon la revendication 1, **caractérisé en ce que** la profondeur de pénétration du centre de liaison (36) dans la deuxième couche (14) représente 5 à 50 % de l'épaisseur initiale de la deuxième couche (14).

7. Matériau composite à plusieurs couches selon l'une des revendications 1 à 6, **caractérisé en ce que**, lorsqu'un tronc de liaison (50) a une profondeur de pénétration de 20 µm dans la deuxième couche (14), la surface d'emboutissage du centre de liaison (36) correspond à 20-25 % de la surface de la zone de liaison (26).

8. Matériau composite à plusieurs couches selon l'une des revendications 1 à 7, **caractérisé en ce que** le non tissé (16) est un non tissé de fibres filées comprenant des fibres (20) composées de PP, PE, PU, PA, PL, d'un copolymère, ou composées de leurs homologues, isomères, ainsi que des mélanges de ces matières premières.

9. Matériau composite à plusieurs couches selon l'une des revendications 1 à 8, **caractérisé en ce que** la deuxième couche (14) présente un poids superficiel de 1 à 50 g/m².

10. Matériau composite à plusieurs couches selon la revendication 9, **caractérisé en ce que** la deuxième couche (14) présente un poids superficiel de 3 à 8 g/m².

11. Matériau composite à plusieurs couches selon l'une des revendications 1 à 10, **caractérisé en ce que** la deuxième couche (14) est une membrane (24) étanche aux liquides et perméable aux gaz.

12. Matériau composite à plusieurs couches selon la revendication 11, **caractérisé en ce que** la membrane (24) est un film en matière plastique.

13. Matériau composite à plusieurs couches selon la revendication 12, **caractérisé en ce que** la membrane (24) est microporeuse.

14. Matériau composite à plusieurs couches selon la revendication 11 ou 13, **caractérisé en ce que** la membrane (24) est une membrane fibreuse.

15. Matériau composite à plusieurs couches selon l'une des revendications 1 à 10, **caractérisé en ce que** la deuxième couche (14) est une feuille en caoutchouc élastique (54).

16. Matériau composite à plusieurs couches selon la revendication 15, **caractérisé en ce que** la feuille en caoutchouc élastique (54) est imperméable.

17. Matériau composite à plusieurs couches selon la revendication 16, **caractérisé en ce que** la feuille en caoutchouc élastique (54) est perméable à la vapeur d'eau.

18. Procédé de fabrication d'un matériau composite à plusieurs couches (10) comprenant au moins deux couches (12, 14) en matières thermoplastiques, dans lequel au moins une première couche (12) est un non tissé (16) composé de fibres thermoplastiques (20), les couches (12, 14) étant reliées entre elles au moins par thermoliage au moyen d'un agencement de rouleaux (38) au niveau de zones de liaison (26), les matériaux des couches (12, 14) étant fusionnés entre eux au moins partiellement au niveau des zones de liaison (26) et ces zones de liaison (26) conférant au matériau composite (10) une structure en trois dimensions, **caractérisé en ce que** la zone de liaison (26) est à chaque fois obtenue au moyen du thermoliage dans une fente de pression des rouleaux (48) de l'agencement de rouleaux (38) de sorte qu'à chaque fois un tronc de liaison (50) sans rebords d'au moins un rouleau de liaison (40) soit enroulé dans les deux couches (12, 14) en exerçant une force en continu sur les axes longitudinaux des fibres (20) se trouvant dans la zone d'influence de la zone de liaison (26).

19. Procédé selon la revendication 18, **caractérisé en ce que** les paramètres de pression en ligne sont modifiés au cours du thermoliage.

20. Procédé selon la revendication 17 ou 18, **caractérisé en ce que** la température du rouleau de liaison (40) est modifiée pendant le thermoliage.

21. Procédé selon l'une des revendications 18 à 20, **caractérisé en ce que**, pour le thermoliage, on choisit une pression correspondant à une courbe de pression en ligne dans la fente de pression des rouleaux (48) de 5 dN/cm à 150 dN/cm de largeur de fente.

22. Procédé selon l'une des revendications 18 à 21, **caractérisé en ce que** le rouleau de liaison (40) présente des troncs de liaison (50) munis de surfaces d'emboutissage sans rebords (52).

23. Procédé selon l'une des revendications 18 à 22, **caractérisé en ce que** la profondeur de pénétration des troncs de liaison (50) représente 5 à 80 % de l'épaisseur initiale du matériau composite (10).

24. Procédé selon l'une des revendications 18 à 23, **caractérisé en ce que** le procédé est réalisé à l'aide d'un agencement de rouleaux (38) composé d'un rouleau de liage (40) et d'un rouleau contraire plan (42).

25. Procédé selon l'une des revendications 18 à 23, **caractérisé en ce que** le procédé est réalisé à l'aide d'un agencement de rouleaux (38) composé de deux rouleaux de liaison congruents (40), les rouleaux de liaison (40) étant à chaque fois munis de troncs de liaison (50) avec des surfaces d'emboutissage sans rebords (52) sur leurs surfaces d'enveloppe (44).

26. Procédé selon l'une des revendications 18 à 23, **caractérisé en ce que** le procédé est réalisé avec un rouleau de liaison (40) et une source de soudage par ultrasons disposée à distance de la surface d'enveloppe (44) du rouleau de liaison (40), le rouleau de liaison (40) étant muni de troncs de liaison (50) avec des surfaces d'emboutissage sans rebords (52) sur sa surface d'enveloppe (44).

27. Procédé selon l'une des revendications 18 à 26, **caractérisé en ce que** les couches (12, 14) du matériau composite (10) sont collées entre elles au niveau des zones de liaison (26) en plus du thermoliage.
